# EUROPÄISCHE PATENTSCHRIFT

(11) **EP 1 717 533 B1**
(45) Veröffentlichungstag und Bekanntmachung des Hinweises auf die Patenterteilung: **24.07.2013**
(21) Anmeldenummer: 06008751.7
(22) Anmeldetag: 27.04.2006
(51) Int. Cl.: F26B 5/06, F26B 25/00

(54) **Verfahren zum kontrollierten Herausführen einer Anzahl von Vials aus einer Gefriertrocknungsanlage und Vorrichtung hierfür**
Process for controlled unloading of a number of vials from a freeze drying plant and apparatus therefor.
Procédé pour le déchargement régulé de plusieurs flacons d'une installation de lyophilisation et dispositif correspondant.

(30) Priorität: 27.04.2005 DE 102005019985
(43) Veröffentlichungstag der Anmeldung: 02.11.2006
(73) Patentinhaber: ACCURRO GmbH, 35041 Marburg (DE)
(72) Erfinder: Wagner, Alexander, 35102 Lohra (DE); Battenberg, Ralf, 35112 Fronhausen (DE)
(74) Vertreter: Walther, Walther & Hinz GbR

(56) Entgegenhaltungen:
- WO-A-02/03001
- DE-A1- 3 700 506
- DE-A1- 10 307 571
- DE-U1- 20 102 879
- DE-U1- 29 507 589
- JP-A- 1 104 503
- JP-A- 63 235 214

## Beschreibung

Die vorliegende Erfindung betrifft ein Verfahren gemäß dem Oberbegriff des Anspruches 1 und eine Vorrichtung gemäß dem Oberbegriff des Anspruches 4.

In Gefriertrocknungsanlagen werden Medikamente, Lebensmittel oder andere Güter in einem vakuumisierten Raum so stark gekühlt, dass die in den Produkten befindliche Feuchtigkeit in kürzester Zeit entweichen kann, so dass die Medikamente, Lebensmittel oder anderen Güter gefriergetrocknet werden. Hierzu werden die Produkte in kleine Glasfläschchen, sogenannte Vials, gefüllt und diese Vials werden dann auf einer entsprechenden Stellfläche im Inneren der Gefriertrocknungsanlage platziert. Dabei werden pro Stellfläche in der Regel gleich große Vials verwendet, welche in regelmäßigen Reihen aufgestellt sind.

Die Beschickung der Stellflächen der Gefriertrocknungsanlage erfolgt heutzutage automatisch mit einer entsprechenden Beschickungsanlage, die vor einer Öffnung einer Gefriertrocknungsanlage angebracht ist. Eine solche Beschickungsanlage ist beispielsweise aus der DE 201 02 879 U1 bekannt. Dabei wird ein auf einer Walze aufgewickeltes Blech mit seiner messerscharfen Vorderkante unter die Vials geschoben und durch Zurückziehen des Bleches werden die Vials von der Stellfläche im Inneren der Gefriertrocknungsanlage auf eine Übergabeebene außerhalb der Gefriertrocknungsanlage gebracht. Diese Übergabeebene ist leicht schräg angeordnet und weist einen Vibrator auf. Mit dieser Vibration werden die Vials bergab bewegt und mit einer Führung derart vereinzelt, dass nur einzelne Vials auf ein neben der Übergabeebene angeordnetes Abförderband gelangen. Dieses Abförderband transportiert dann die einzelnen Vials zur nächsten Bearbeitungsstation.

Aus der DE 37 00 506 A1 ist eine Vorrichtung bekannt, bei der das Herausführen der Vials aus der Anlage mittels einer aus einem dünnen Blech gebildeten Aufnahmepalette erfolgt. Dabei schiebt sich die Aufnahmepalette unter die Vials und transportiert diese heraus. Anschließend werden die auf der Aufnahmepalette befindlichen Vials mittels einer Ausstoßstange auf einen Förderer geschoben. Hierbei verlieren die ursprünglich in Reihe angeordneten Vials ihre Ordnung und geraten durcheinander.

Aus dem DE 295 07 589 U1 ist eine Beschickungsanlage für pharmazeutische Anlagen bekannt, bei dem auf einem Zuführband herangeführte Vials mittels eines Schiebers auf einen Übergabetisch geschoben werden. Dabei werden durch den Schieber immer eine gewisse Anzahl von Vials gleichzeitig verschoben, so dass die Vials auf dem Übergabetisch in einzelnen Reihen angeordnet sind.

Zur Qualitätskontrolle des getrockneten Gefriergutes wäre es vorteilhaft, solche Vials zu überprüfen, die innerhalb der Gefriertrocknungsanlage an kritischen Stellen platziert waren. Da die einzelnen Vials aber bei dem vorgenannten Beschickungsvorrichtungen unkontrolliert auf das Abförderband gelangen, ist diese Art der Qualitätskontrolle nicht möglich.

Davon ausgehend liegt der vorliegenden Erfindung die Aufgabe zu Grunde, ein Verfahren und eine Vorrichtung der eingangs genannten Art zu schaffen, mit der die Vials derart kontrolliert entladen werden, dass eine nachträgliche Bestimmung der Position des Vials in der Gefriertrocknungsanlage möglich ist.

Als technische Lösung dieser Aufgabe wird erfindungsgemäß eine Verfahren mit den Merkmalen des Anspruches 1 und eine Vorrichtung mit den Merkmalen des Anspruches 4 vorgeschlagen. Vorteilhafte Weiterbildungen dieses Verfahrens und dieser Vorrichtung sind den jeweiligen Unteransprüchen zu entnehmen. ,

Ein nach dieser technischen Lehre ausgebildetes Verfahren und eine nach dieser technischen Lehre ausgeführtes Vorrichtung haben den Vorteil, dass durch die Reihenweise Übergabe der Vials an das Abförderband und durch die Beibehaltung der Position der Vials zueinander die originäre Reihenfolge der Vials erhalten bleibt, so dass anhand der Reihenfolge der auf dem Abförderband transportierten Vials nachvollzogen werden kann, an welcher Stelle auf der Stellfläche ein bestimmtes Vial gestanden haben muss. Will man nun eine stichprobenartige Qualitätsuntersuchung des gefriergetrockneten Gutes durchführen, so kann man zunächst einmal festlegen an welchen Stellen der Stellfläche die Probe entnommen werden soll und kann dann ermitteln, an welcher Position auf dem Abförderband das betreffende Vial steht, um dieses zu entnehmen. Folglich ist eine gezielte Qualitätskontrolle mit dem hier beschriebenen Verfahren möglich.

Hierzu ist ein Anschlag vorgesehen, an den die aus der Gefriertrocknungsanlage kommenden, in mehreren Reihen angeordneten Vials derart herangeführt werden, dass eine vorderste Reihe der Vials am Anschlag zur Anlage kommt. Dies hat den Vorteil, dass die Vials kontrolliert und geordnet und vor allem in der auf der Stellfläche vorhandenen Anordnung auf die Übergabeebene gelangen und dort definiert abgestellt werden können.

Sodann wird das als dünnes Blech ausgeführte Transportmittel unter die vorderste Reihe der Vials geschoben und zusammen mit den Vials und dem Anschlag von der Übergabeebene weg zum Abtransportband hin bewegt, bevor das Blech weggezogen wird und die Vials auf das Abförderband gelangen. Dabei werden die Vials gegen den Anschlag gedrückt, so dass dieser als Abstreifer fungiert. Hierdurch wird eine kontrollierte Übergabe der Vials auf das Abförderband gewährleistet, ohne dass einzelne Vials dabei umfallen, beschädigt werden oder ihre angestammte Position verändern.

In einer bevorzugten Ausführungsform ist an der hinteren Reihe der Vials ein Schieber vorgesehen, der bis an die auf der Übergabeebene stehenden Vials herangeführt wird. Dies hat den Vorteil, dass der Schieber eine Art Gegenlager bietet, wenn das Transportmittel die Vials der vordersten Reihe untergreift. Hiermit wird verhindert, dass die Vials beim Erfassen durch das Transportmittel ungewollt verschoben werden.

Weitere Vorteile des erfindungsgemäßen Verfahrens und der erfindungsgemäßen Vorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematisierte Darstellung einer erfindungsgemäßen Vorrichtung zusammen mit einer Gefriertrocknungsanlage in geschnittener Seitenansicht;
- Fig. 2: eine schematisierte Darstellung der Vorrichtung gemäß Fig. 1 in perspektivischer Ansicht zu einem Zeitpunkt 1;
- Fig. 3: eine schematisierte Darstellung der Vorrichtung gemäß Fig. 1 in perspektivischer Ansicht zu einem Zeitpunkt 2;
- Fig. 4: eine schematisierte Darstellung der Vorrichtung gemäß Fig. 1 in perspektivischer Ansicht zu einem Zeitpunkt 3;
- Fig. 5: eine schematisierte Darstellung der Vorrichtung gemäß Fig. 1 in perspektivischer Ansicht zu einem Zeitpunkt 4;
- Fig. 6: eine schematisierte Darstellung der Vorrichtung gemäß Fig. 1 in perspektivischer Ansicht zu einem Zeitpunkt 5;
- Fig. 7: eine schematisierte Darstellung der Vorrichtung gemäß Fig. 1 in perspektivischer Ansicht zu einem Zeitpunkt 6.

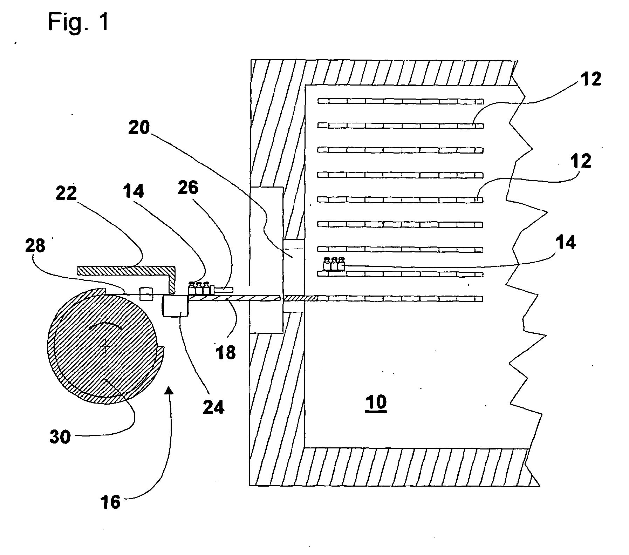

In Fig. 1 ist in schematischer Seitenansicht eine Gefriertrocknungsanlage 10 mit darin befindlichen, vertikal verfahrbaren Stellflächen dargestellt. Andeutungsweise sind auf den Stellflächen 10 einige Vials 14 abgebildet. Es versteht sich, dass bei normalem Betrieb der Gefriertrocknungsanlage 10 sämtliche Stellflächen 12 vollständig mit Vials gefüllt sind.

Vor der Gefriertrocknungsanlage 10 ist eine Vorrichtung 16 zum kontrollierten Herausführen einer Anzahl von Vials aus eine Gefriertrocknungsanlage 10 angeordnet, deren Übergabeebene 18 in eine Beschickungsöffnung 20 der Gefriertrocknungsanlage 10 hineinragt. Diese Vorrichtung 16 umfasst weiterhin einen Anschlag 22, ein Abförderband 24, einen Schieber 26, ein als dünnes Blech ausgeführtes Transportmittel 28 und eine Rolle 30 zum Aus- und/oder Abwickeln des Transportmittels 28.

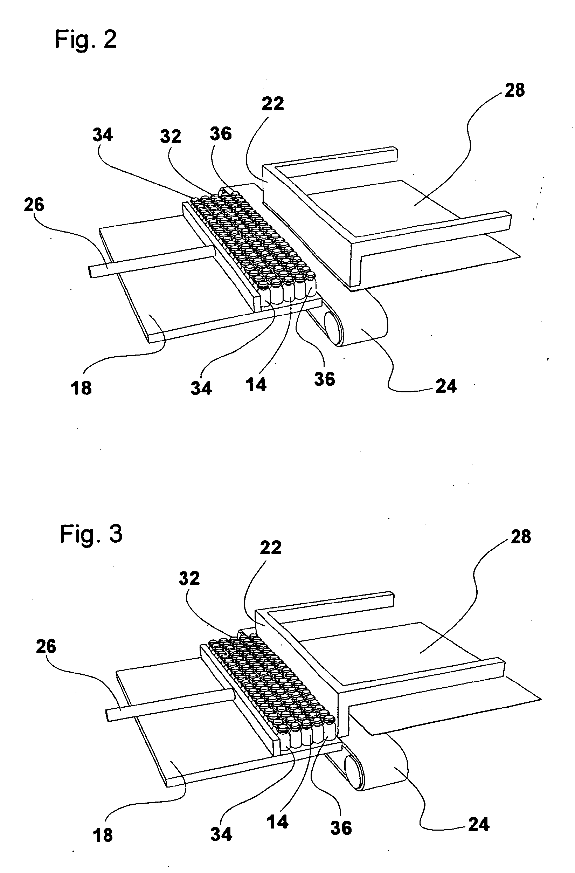

Das als Blech ausgebildete Transportmittel 28 wird oberhalb des Abförderbandes 24 und unterhalb des Anschlages 22 hindurchgeführt und ist mit seiner messerscharfen Vorderkante in der Lage, sich zwischen die Übergangsebene 18 und die auf der Übergabeebene 18 abgestellten Vials 14 zu schieben. Nachfolgend wird anhand der Figuren 2 bis 7 das Verfahren zum kontrollierten Herausführen einer Anzahl von Vials aus einer Gefriertrocknungsanlage im Detail beschrieben:
Auf der Stellfläche 12 einer Gefriertrocknungsanlage 10 sind eine Vielzahl von Vials 14 in mehreren Reihen 32 angeordnet. Diese Vials 14 einer Stellfläche 12 werden in einer aus dem Stand der Technik bekannten Art und Weise durch eine Befüllungsöffnung 20 hindurch von einer Stellfläche 12 auf eine Übergabeebene 18 gebracht. Dabei verbleiben sämtliche Vials 14 in ihrer angestammten Ordnung und Reihenfolge. Wie Fig. 2 zu entnehmen ist, wird anschließend der Schieber 26 soweit an die hinterste Reihe 34 der Vials 14 herangeführt, dass ein Verschieben der Vials 14 nach hinten nicht mehr möglich ist.

Wie in Figur 3 dargestellt ist wird anschließend der Anschlag 22 an eine vorderste Reihe 36 der Vials 14 herangeführt, um auch ein unbeabsichtigtes Verrutschen der Vials 14 nach vorne zu verhindern.
In einer anderen, hier nicht dargestellten Ausführungsform ist der Anschlag 22 zu Beginn der Übergabe bereits am Rand der Übergabeebene 18 angeordnet, so dass die Vials 14 beim Herausführen aus der Gefriertrocknungsanlage 10 bis an den Anschlag 22 herangeführt werden können.

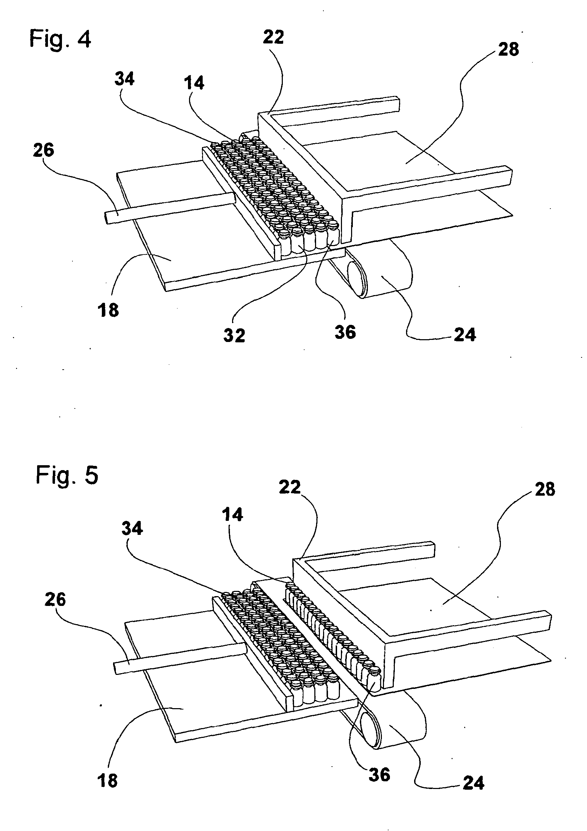

Wie Fig. 4 zu entnehmen ist, wird dann das als dünnes Blech ausgeführte Transportmittel 28 zwischen dem Abförderband 24 und dem Anschlag 22 hindurchgeführt und untergreift die vorderste Reihe 36 der Vials 14. Anschließend wird die vorderste Reihe 36 der Vials zusammen mit dem Transportmittel 28 und dem Anschlag 22 von der Übergabeebene 18 weg bis über das Abförderband 24 versetzt, wie Fig. 5 zu entnehmen ist.

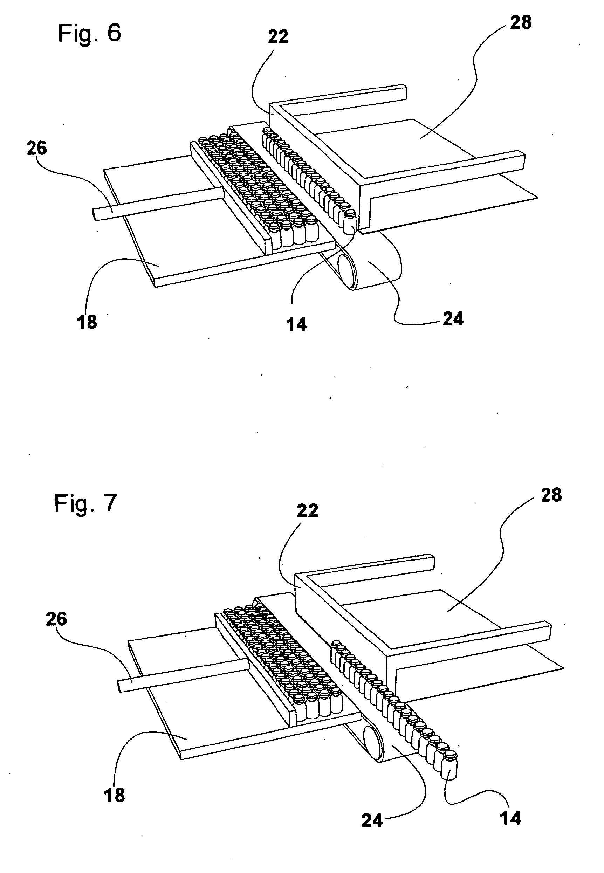

Fig. 6 ist zu entnehmen, dass danach das Transportmittel 28 wieder zurück gezogen, so dass die Vials 14 auf dem Abförderband 24 abgestellt werden. Dabei dient der Anschlag 22 als Abstreifer, so dass die Vials 14 in der angestammten Reihenfolge und Position verbleiben und nicht unkontrolliert bewegt werden.

Abschließend werden die Vials 14 über das Abförderband 24 dann zur weiteren Bearbeitung abtransportiert. Dabei ist sicher gestellt, dass die Vials 14 in der ursprünglichen Reihenfolge verbleiben, so dass es später möglich ist, einem bestimmten Vials 14 eine entsprechende Position auf der Stellfläche 12 der Gefriertrocknungsanlage 10 zuzuordnen.

### Bezugszeichenliste:

- 10: Gefiertrocknungsanlage
- 12: Stellfläche
- 14: Vial
- 16: Vorrichtung zum kontrollierten Herausführen einer Anzahl von Vials
- 18: Übergabeebene
- 20: Beschickungsöffnung
- 22: Anschlag
- 24: Abförderband
- 26: Schieber
- 28: Transportmittel
- 30: Rolle
- 32: Reihe
- 34: hinterste Reihe
- 36: vorderste Reihe

## Patentansprüche

1. Verfahren zum kontrollierten Herausführen einer Anzahl von Vials (14) aus einer Gefriertrocknungsanlage (10), bei dem die in mehreren Reihen (32) geordnet auf einer Stellfläche (12) der Gefriertrocknungsanlage (10) stehenden Vials (14) von der Stellfläche (12) innerhalb der Gefriertrocknungsanlage (10) auf eine Übergabeebene (18) außerhalb der Gefriertrocknungsanlage (10) gebracht werden und bei dem die Vials (14) dann über ein Abförderband (24) zur weiteren Bearbeitung abtransportiert werden, wobei die aus der Gefriertrocknungsanlage (10) kommenden, in mehreren Reihen angeordneten Vials (14) an einen Anschlag (22) herangeführt werden, so dass eine vorderste Reihe (36) der Vials (14) am Anschlag (22) zur Anlage kommt und wobei ein als dünnes Blech ausgeführtes Transportmittel (28) die vorderste Reihe (36) von Vials (14) untergreift, wobei
das Transportmittel (28) die in dieser Reihe (36) stehenden Vials (14) nahezu gleichzeitig untergreift und wobei das Transportmittel (28) zusammen mit den darauf befindlichen Vials (14) und dem Anschlag (22) zunächst über das Abförderband (24) bewegt werden und danach das als dünnes Blech ausgeführte Transportmittel (28) unter den Vials weggezogen wird, wobei die Vials (14) gegen den Anschlag (22) gedrückt werden und anschließend nahezu gleichzeitig auf das Abförderband (24) gelangen.

2. Verfahren nach Anspruch 1,
**dadurch gekennzeichnet,**
**dass** an die hinterste Reihe (34) der Vials (14) ein Schieber (26) herangeführt wird.

3. Verfahren nach Anspruch 2,
**dadurch gekennzeichnet,**
**dass** der Schieber (26) während des Abtransportes der vorderen Reihen der Vials (14) nachgeführt wird, so dass der Schieber (26) stets an der hintersten Reihe (34) der Vials (14) anliegt.

4. Vorrichtung zum kontrollierten Herausführen einer Anzahl von Vials (14) aus einer Gefriertrocknungsanlage (10), mit einer Übergabeebene (18) zum vorübergehenden Abstellen der in mehreren Reihen (32) angeordneten Vials (14) nach dem Austreten aus der Gefriertrocknungsanlage (10), mit einem Abförderband (24) zum Abtransport der Vials (14), und mit einem als dünnes Blech ausgeführten Transportmittel (28) zum Untergreifen einer definierten Reihe (32) von Vials (14),
**gekennzeichnet durch**
einen Anschlag (22) an dem eine vorderste Reihe (36) der auf der Übergabeebene (18) befindlichen Vials (14) zur Anlage kommt, wobei das Transportmittel (28) gemeinsam mit dem Anschlag (22) über das Abförderband (24) versetzbar ist, und wobei das Transportmittel (28) wieder zurückziehbar ist, während der Anschlag (22) in dieser Position verbleibt.

5. Vorrichtung nach Anspruch 4,
**dadurch gekennzeichnet,**
**dass** der Anschlag (22) als Abstreifer dient.

6. Vorrichtung nach einem der Ansprüche 4 bis 5,
**gekennzeichnet durch**
einen Schieber (26), der an die hinterste Reihe der Vials (14) heranführbar ist.

## Claims

1. A method for leading a number of vials (14) out of a freeze-drying unit (10) in a controlled manner, in which the vials (14) arranged in several rows (32) and standing on a storage surface (12) inside the freeze-drying unit (10) are brought from the storage surface (12) inside the freeze-drying unit (10) onto a transfer plane (18) outside the freeze-drying unit (10) and in which the vials (14) are then transported away for further processing via a discharge belt (24), wherein the vials (14) coming from the freeze-drying unit (10) and arranged in several rows are brought to a limit-stop (22), so that a front row (36) of the vials (14) comes to rest on the limit-stop (22) and wherein a transport means (28) configured as a thin metal sheet reaches under the front row (36) of the vials (14),
wherein the transport means (28) reaches almost simultaneously under the vials (14) disposed in this row (36) and wherein the transport means (28) is first moved over the discharge belt (24) together with the vials (14) located thereon and the limit-stop (28) and the transport means (28) configured as a thin metal sheet being then pulled away from under the vials, the vials (14) being pressed against the limit-stop (22) and then getting almost simultaneously onto the discharge belt (24).

2. The method according to claim 1,
**characterized in that**
a pusher (26) is brought toward the back row (34) of the vials (14).

3. The method according to claim 2,
**characterized in that**
while the front row of the vials (14) is transported away, the pusher (26) follows so that the pusher (26) always rests against the back row (34) of the vials (14).

4. A device for leading a number of vials (14) out of a freeze-drying unit (10) in a controlled manner, with a transfer plane (18) for temporarily setting down the vials (14) disposed in several rows (32) after they exit the freeze-drying unit (10), with a discharge belt (24) for transporting the vials (14) away, and with transport means (28) configured as a thin metal sheet for reaching under a specific row (32) of vials (14),
**characterized by**
a limit-stop (22) against which a front row (36) of the vials (14) located on the transfer plane (18) comes to rest, wherein the transport means (18) is displaceable together with the limit-stop (22) above the discharge belt (24) and wherein the transport means (28) is retractable whereas the limit-stop (22) remains in this position.

5. The device according to claim 4,
**characterized in that**
the limit-stop (22) serves as a deflector.

6. The device according to one of the claims 4 to 5,
**characterized by**
a pusher (26) that is adapted to be moved toward a back row of the vials (14).

## Revendications

1. Méthode pour faire sortir un nombre de fioles (14) d'une unité de lyophilisation (10) de manière contrôlée, dans laquelle les fioles (14) disposées de manière ordonnée en plusieurs rangées (32) sur une surface de pose (12) de l'unité de lyophilisation (10) sont menées de la surface de pose (12) à l'intérieur de l'unité de lyophilisation (10) vers un plan de transfert (18) à l'extérieur de l'unité de lyophilisation (10) et dans laquelle les fioles (14) sont ensuite transportés vers d'autres étapes de traitement par un convoyeur de transport (24), les fioles (14) disposées en plusieurs rangées provenant de l'unité de lyophilisation (10) étant amenées vers une butée (22), de sorte qu'une première rangée (36) de fioles (14) vient en appui sur la butée (22) et un moyen de transport (28) en forme de fine plaque de métal saisissant la première rangée (36) de fioles (14) par en-dessous,
le moyen de transport (28) saisissant les fioles (14) de cette rangée (36) par en-dessous de manière quasi simultanée et le moyen de transport (28) avec la butée (22) et les fioles (14) qui s'y trouvent étant d'abord déplacé au-dessus du convoyeur de transport (24) et le moyen de transport (28) en forme de fine plaque de métal étant ensuite retiré de sous les fioles, les fioles (14) étant pressées contre la butée (22) et parvenant ensuite sur le convoyeur de transport (24) de manière quasi simultanée.

2. Méthode selon la revendication 1,
**caractérisée en ce qu'**un pousseur (26) est amené jusqu'à la dernière rangée (34) des fioles (14).

3. Méthode selon la revendication 2,
**caractérisée en ce que** lors du transport des premières rangées des fioles (14) le pousseur (26) les suit, de sorte que le pousseur (26) est toujours en appui contre la dernière rangée (34) des fioles (14).

4. Dispositif pour faire sortir un nombre de fioles (14) d'une unité de lyophilisation (10) de manière contrôlée, avec un plan de transfert (18) pour le dépôt provisoire des fioles (14) disposées en plusieurs rangées (32) après qu'elles soient sorties de l'unité de lyophilisation (10), avec un convoyeur de transport (24) pour transporter les fioles (14) et avec un moyen de transport (28) en forme de fine plaque de métal pour saisir une rangée déterminée (32) de fioles (14),
**caractérisé par**
une butée (22) contre laquelle une première rangée (36) des fioles (14) se trouvant sur le plan de transfert (18) vient en appui, le moyen de transport (28) étant déplaçable avec la butée (22) au-dessus du convoyeur de transport (24) et le moyen de transport (28) étant rétractable tandis que la butée (22) reste dans cette position.

5. Dispositif selon la revendication 4,
**caractérisé en ce que**
la butée (22) sert de déflecteur.

6. Dispositif selon l'une des revendications 4 à 5,
**caractérisé par**
un pousseur (26) apte à être amené contre la dernière rangée des fioles (14).
